# EUROPÄISCHE PATENTANMELDUNG

(11) **EP 1 359 437 A1**
(43) Veröffentlichungstag der Anmeldung: **05.11.2003**
(21) Anmeldenummer: 02009682.2
(22) Anmeldetag: 29.04.2002
(51) Int. Cl.: G01S 15/87, H04S 1/00

(54) **Verfahren zum Bestimmen einer Position eines Benutzers eines Kommunikationsendgerätes**

(71) Anmelder: SIEMENS AKTIENGESELLSCHAFT, 80333 München (DE)
(72) Erfinder: Poerchmann, Christoph, Dr., 45966 Gladbeck (DE)

(57) **Zusammenfassung**

Verfahren zum Bestimmen einer Position eines Benutzers eines akustischen Wiedergabegeräts, wie eines Kommunikationsendgerätes, das mit mindestens zwei Lautsprechern (1, 2) und einem Mikrophon (3) ausgestattet ist, wird die Aufgabe, den Aufwand an Hardware zur Durchführung des Verfahrens zu vermindern, dadurch gelöst, dass von den mindestens zwei Lautsprechern (1, 2) aus ein geeignetes Anregungssignal ausgesendet wird, wenn der Benutzer sich in der Umgebung des akustischen Wiedergabegerätes befindet, eine Impulsantwort des Anregungssignals von dem Mikrophon erfasst wird und die Impulsantwort zur Bestimmung der Position des Benutzers ausgewertet wird.

## Beschreibung

Verfahren zum Bestimmen einer Position eines Benutzers eines Kommunikationsendgerätes

Die Erfindung bezieht sich auf ein Verfahren zum Bestimmen einer Position eines Benutzers eines akustischen Wiedergabegerätes, wie eines Kommunikationsendgerätes, das mit mindestens zwei Lautsprechern und einem Mikrophon ausgestattet ist.

Ein solches Verfahren wird üblicher Weise eingesetzt, wenn z.B. bestimmte Funktionen eines Kommunikationsendgerätes von der Position des Benutzers abhängen. Dies ist beispielsweise dann der Fall, wenn akustische Signale von dem Kommunikationsendgerät gerichtet ausgestrahlt werden.

Dabei ist eine möglichst präzise Bestimmung der Position des Benutzers bei Kommunikationsendgeräten dann von Bedeutung, wenn die mindestens zwei Lautsprecher des Kommunikationsendgerätes zum mehrkanaligen Abstrahlen von akustischen Signalen verwendet werden sollen. Mittlerweile sind sog. transaurale Systeme verfügbar, bei denen über die zwei Lautsprecher die Schallsignale so abgestrahlt werden, dass ein Übersprechen geeignet kompensiert wird, bei dem sonst Schall von einem linken Kanal das rechte Ohr des Benutzers erreicht und umgekehrt. Verfahren zum Vermeiden des Übersprechens sind auch unter dem Begriff "Cross-Talk-Cancellation" bekannt.

Die transauralen akustischen Systeme ermöglichen es, einen beliebigen Schalldruckverlauf an dem linken und dem rechten Ohr des Benutzers zu synthetisieren und somit eine räumliche Darbietung von Schallquellen zu erzeugen, die üblicher Weise "virtuelle Schallquellen" genannt werden. Diese virtuellen Schallquellen können prinzipiell an einer beliebigen Position in der Umgebung des Benutzers Kommunikationsendgerätes platziert sein.

Eine Schwierigkeit bei der konventionellen transauralen Darbietung von Schallquellen ist es, dass die Position des Benutzers sehr genau bekannt sein muss, so dass das Kommunikationsendgerät die über die jeweiligen Lautsprecher ausgestrahlten Schallsignale entsprechend der Position der virtuellen Schallquelle steuern kann. Insbesondere gibt es einen stark lokalisierten Bereich ("Sweet Spot") außerhalb dem die transaurale Darbietung nicht realisiert ist. Insofern ist es von Wichtigkeit, in die Steuerung der Schallsignale die Position des Benutzers möglichst genau miteinzubeziehen.

Im Stand der Technik ist das sog. "Head Tracking" bekannt, bei dem relative Kopfpositionen des Benutzers beispielsweise mit Hilfe einer digitalen Kamera erfasst werden. Das Vorsehen einer Kamera hat jedoch den Nachteil, dass ein erhöhter Aufwand an Hardware zur zufriedenstellenden Durchführung der transauralen Darbietung vonnöten ist.

Ausgehend hiervon liegt der Erfindung die Aufgabe zugrunde, ein Verfahren bereitzustellen, mit Hilfe dessen sich die Position eines Benutzers eines akustischen Wiedergabegerätes möglichst ohne erhöhten Aufwand zusätzlicher Hardware verwirklichen lässt, wobei auch eine Verwendung dieses Verfahrens für ein transaurales akustisches System angegeben werden soll.

Diese Aufgabe wird bei dem eingangs genannten Verfahren dadurch gelöst, dass
- von den mindestens zwei Lautsprechern aus ein geeignetes Anregungssignal ausgesendet wird, wenn der Benutzer sich in der Umgebung des akustischen Wiedergabegerätes befindet,
- eine Impulsantwort des Anregungssignals von dem Mikrophon erfasst wird und
- die Impulsantwort zur Bestimmung der Position des Benutzers ausgewertet wird.

Das Verfahren ist z. B. bei Kommunikationsendgeräten, wie einem Bürofreisprechtelefon, einem Notebook und einem Personalcomputer o. ä., anwendbar, wobei generell die Qualität der Positionsbestimmung mit wachsendem Abstand zwischen den beiden Lautsprechern zunimmt. Sofern zwei Lautsprecher vorgesehen sind, ist eine Positionsbestimmung in einer Ebene, die beide Lautsprecher enthält für den Benutzer möglich. Sofern ein dritter Lautsprecher eingesetzt wird, ist bei seiner geeigneten Positionierung auch eine dreidimensionale Erfassung der Position des Benutzers möglich.

Die Auswertung der erfassten Impulsantwort kann in üblicher Weise erfolgen, wobei in der Impulsantwort nach charakteristischen Signalausschlägen zu suchen ist, deren zeitliche Position ein Anhaltspunkt für die Position des Benutzers ist. Insbesondere lässt sich im Verlauf der Impulsantwort ohne weiteres zwischen unmittelbar von einem der Lautsprecher zum Mikrophon gelangten Signalen und an einem weiteren Objekt, wie dem Benutzer reflektierten Signalen unterscheiden.

Bevorzugt wird bei dem Verfahren als Referenz die Impulsantwort des Anregungssignals in Abwesenheit des Benutzers erfasst und ausgewertet. Auf diese Weise wird es noch einfacher, die Impulsantwort in Gegenwart des Benutzers auszuwerten, da sowohl direkt von den Lautsprechern zum Mikrophon gelangte Signale als auch an weiteren Objekten in der Umgebung des mobilen Kommunikationsendgerätes reflektierte Signale als Hintergrund abgezogen werden können.

Als Anregungssignal, das von den Lautsprechern ausgesandt wird, wird bevorzugt ein geeignetes breitbandiges "Maximum Length Sequence(s)"-Signal zu diesem Zweck hervorzuheben ist.

Ebenfalls Gegenstand der Erfindung ist die Verwendung des oben beschriebenen Verfahrens zur Steuerung eines transauralen akustischen Systems, das bei dem Kommunikationsendgerät verwirklicht ist. Der Einsatz des Verfahrens erlaubt eine Vermeidung des Übersprechens.

Insbesondere kann die gemäß des Verfahrens ermittelte Position des Benutzers als Regelgröße für die Komponenten des Kommunikationsendgerätes dienen, die für die Abstrahlung akustischer Signale über die Lautsprecher im Rahmen des transauralen Systems maßgeblich sind.

Die Erfindung wird nachfolgend anhand von Ausführungsbeispielen unter Bezugnahme auf die Zeichnungen noch näher erläutert.
Figur 1 zeigt eine schematische Darstellung einer Anordnung mit zwei Lautsprechern, einem Mikrophon und einem Benutzer eines Kommunikationsendgerätes zur Veranschaulichung des Verfahrens,
Figur 2 zeigt eine grafische Darstellung einer Impulsantwort des linken Lautsprechers von Figur 1 ohne Anwesenheit eines Benutzers des Kommunikationsendgeräts,
Figur 3 zeigt eine Impulsantwort des linken Lautsprechers von Figur 1 bei Anwesenheit des Benutzers in mittlerer Distanz von dem Kommunikationsendgerät,
Figur 4 zeigt eine Impulsantwort des linken Lautsprechers von Figur 1 bei Anwesenheit des Benutzers des Kommunikationsendgerätes in naher Distanz von dem Kommunikationsendgerät,
Figur 5 zeigt die Differenz zwischen den Figuren 4 und 2 und
Figur 6 zeigt die Differenz zwischen den Figuren 3 und 2.

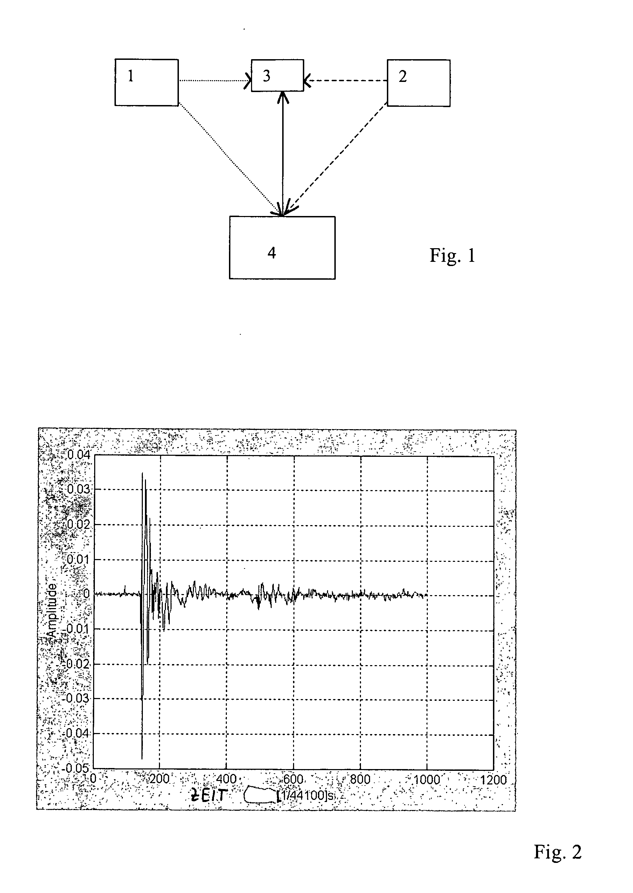

Figur 1 zeigt eine allgemeine Anordnung zur Durchführung eines Verfahrens zur Bestimmung der Position eines Benutzers eines Kommunikationsendgerätes. Im dargestellten Ausführungsbeispiel sind im wesentlichen entlang einer Linie zwei Lautsprecher 1, 2 und ein Mikrophon 3 angeordnet, wobei das Mikrophon 3 zwischen den zwei Lautsprechern platziert ist.

Ein Benutzer 4 eines Kommunikationsendgerätes, zu dem die Lautsprecher 1, 2 und das Mikrophon 3 gehören, befindet sich in jeweiligen Abständen zu den beiden Lautsprechern 1, 2 und dem Mikrophon 3.

In Figur 1 ist mittels einer gepunkteten Linie angezeigt, auf welchen Hauptwegen Schallsignale des linken Lautsprechers 1 das Mikrophon 3 erreichen. Bei den Schallsignalen handelt es sich für das Mikrophon 3 teilweise um Direktschall und teilweise um Reflektion an dem Benutzer. Für den rechten Lautsprecher 2 sind die Hauptwege für die Schallausbreitung zum Mikrophon 3 hin mittels einer gestrichelten Linie dargestellt. Eine durchgezogene Linie gibt den Weg von Reflektionen von Schallsignalen der Lautsprecher 1, 2 von dem Benutzer 4 zu dem Mikrophon 3 an.

Die in den Figuren 2 bis 4 dargestellten Impulsantworten beziehen sich sämtlich auf ein Anregungssignal des linken Lautsprechers 1 von Figur 1. Bei dem Anregungssignal handelt es sich um ein "Maximum Length Sequence(s)"-Signal. Ein solches Signal zeichnet sich dadurch aus, dass es sich aus Teilsignalen zusammensetzt, die spektral gleich verteilt sind (weißes Rauschen) und ausschließlich die Signalwerte 0 oder 1 enthalten. Die Abfolge der Werte 0 und 1 ergibt sich aus einer einfachen Vorschrift, die durch ein Schieberegister und Komparatoren realisiert werden kann. Aus einem Mikrophonsignal, das auf dem Anregungssignal beruht, kann recht einfach die Impulsantwort des linken Lautsprechers bestimmt werden: eine Kreuzkorrelation des gemessenen Mikrophonsignals und des "Maximum Length Sequence(s)"-Signals als Beispiel für weißes Rauschen ist die Impulsantwort des im vorliegendem Fall beispielhaften linken Lautsprechers 1.

Alternativ können auch andere Audiosignale breitbandiger Art als Anregungssignale in Frage kommen, beispielsweise Rauschanregungen, Sweeps o.ä.. Solche Anregungssignale können den Vorteil haben, besser spektral geformt werden zu können.

Im Hinblick auf das "Maximum Length Sequence(s)"-Signal ist als Vorteil hervorzuheben, dass es derart leise abgespielt werden kann, dass es von seiner Intensität her unterhalb der Hörschwelle des Benutzers liegt. Auf diese Weise ist es möglich, ohne Störung des Benutzers fortlaufend Messungen der Position des Benutzers durchzuführen, wobei über eine ausreichende Anzahl einzelner Messungen gemittelt werden kann, so dass sich präzise Positionsergebnisse zeigen. Allgemein ist darauf hinzuweisen, dass jeweils gewählte Anregungssignale vorteilhaft derart leise abgespielt werden, dass sie von ihrer Intensität her unterhalb der Hörschwelle des Benutzers liegen. Alternativ ist es auch möglich, dass die Intensität der Anregungssignale an über die Lautsprecher 1, 2, abgespielte Audiosignale derart angepasst werden, dass die Audiosignale die Anregungssignale verdecken.

Es wird darauf hingewiesen, dass nach der einschlägigen DIN 1320 die Hörschwelle als der minimale Schalldruckpegel eines bestimmten Schallsignals definiert ist, der bei einem Benutzer eine auditive Wahrnehmung auslöst. Nach derselben Norm wird unter einer Verdeckung eine Anhebung der Hörschwelle eines Schalls in Folge des Einflusses eines anderen Schalls, beispielsweise eines sog. Maskierers verstanden. Von einem Maskierer wird gesprochen, wenn Schall vorliegt, der die Wahrnehmung eines anderen Schalls verdeckt oder in der Lautheit drosselt. Insofern wird auf die genannte DIN Norm bezug genommen.

In den Figuren 2 bis 6 sind verschiedene Impulsantworten des linken Lautsprechers 1 bzw. weiterverarbeitete Impulsantworten dargestellt.

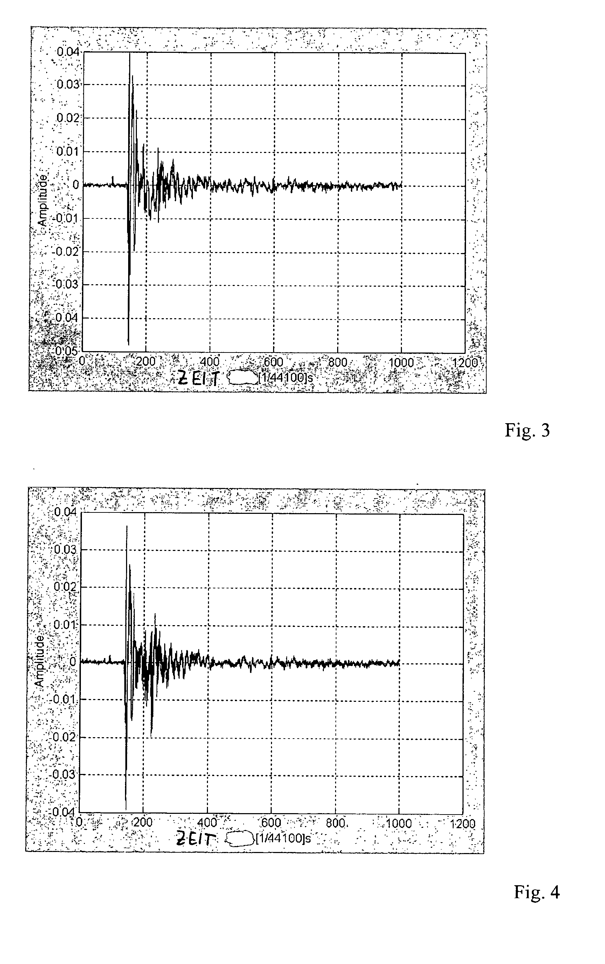

Im einzelnen zeigt die Figur 2 eine Impulsantwort des linken Lautsprechers 1 ohne Anwesenheit des Benutzers, die Figur 3 die Impulsantwort des linken Lautsprechers 1 bei Anwesenheit des Benutzers in mittlerer Distanz und die Figur 3 die Impulsantwort des linken Lautsprechers 1 bei Anwesenheit des Benutzers in naher Distanz zu den beiden Lautsprechern 1, 2.

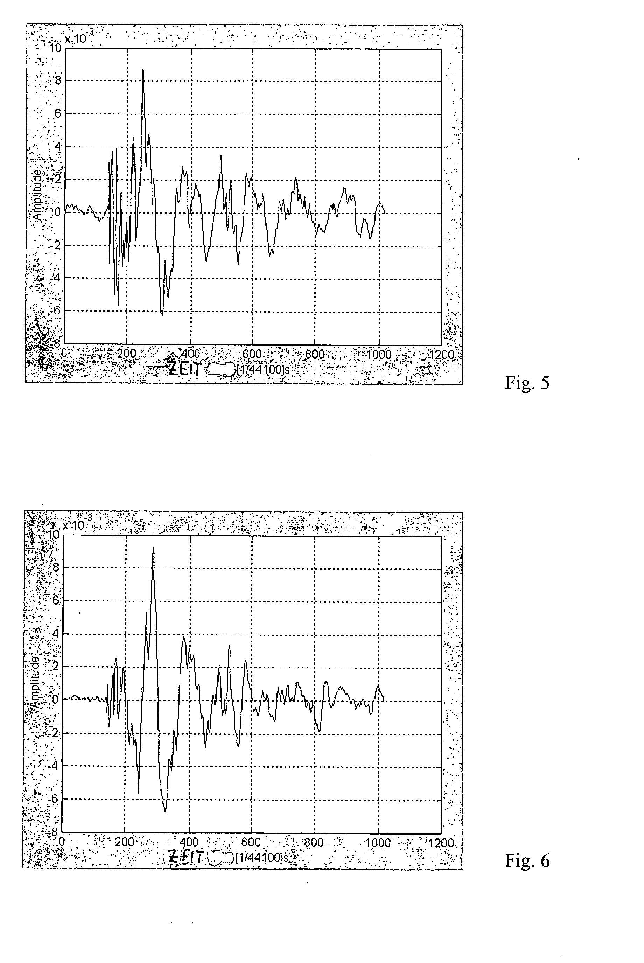

Die Darstellungen der Figuren 5 und 6 beruhen auf tiefpassgefilterten Signalen. Als Hintergrund wurde bei den Figuren 5 und 6 jeweils die Impulsantwort gemäß Figur 2 ohne Anwesenheit des Benutzers in der Umgebung des Kommunikationsendgeräts verwendet. Insofern zeigt die Figur 5 die Differenz zwischen den Figuren 4 und 2, während die Figur 6 die Differenz zwischen den Figuren 3 und 2 angibt. Wie sich den Figuren 5 und 6 ohne weiteres entnehmen lässt, liegt das Intensitätsmaximum der Impulsantwort in Figur 5 zu einem früheren Zeitpunkt als in Figur 6, was mit den jeweiligen experimentellen Bedingungen hinsichtlich Entfernung des Benutzers 4 vom Kommunikationsendgerät übereinstimmt.

Zur Bestimmung der Position des Benutzers müssen auch für den zweiten Lautsprecher entsprechende Impulsantworten gewonnen werden. Dann ist es möglich, in einer Ebene, welche die beiden Lautsprecher 1, 2 und das Mikrophon 3 enthält, die Position des Benutzers nachzuverfolgen. Mit Hilfe der bekannten relativen Lagen der Lautsprecher 1, 2 und des Mikrophons 3 zueinander sind Positionsberechnungen möglich.

Das vorstehend beschriebene Verfahren findet seine Anwendung beispielsweise bei Telefonkonferenzen mit mehreren Teilnehmern. Dabei werden einzelne Sprachkanäle getrennt an den Benutzer übertragen, z. B. mittels "Voice Over IP". Das Kommunikationsendgerät ermöglicht es, einzelne Schallquellen räumlich um den Benutzer herum zu platzieren, wobei jeder Schallquelle ein Teilnehmer der Telefonkonferenz zugeordnet ist. In diesem Sinne werden die Lautsprecher 1, 2 zur Realisierung eines transauralen Systems, insbesondere zum Vermeiden des Übersprechens dabei, eingesetzt. Dieses System passt sich im Betrieb automatisch an die mittels des Verfahrens bestimmte aktuelle Benutzerposition an, so dass die räumliche Wahrnehmung der Schallquellen für den Benutzer auch dann bestehen bleibt, wenn er seine Sitzposition verändert oder sich in anderer Weise fortbewegt.

Das Verfahren kann auch dazu eingesetzt werden, festzustellen, ob sich der Benutzer in der Nähe des Kommunikationsendgerätes befindet. Abhängig von dieser Feststellung können weitere Maßnahmen veranlasst werden, beispielsweise eine Deaktivierung der Lautsprecher 1, 2 oder einer Aktivierung eines Bildschirmschoners, der bei dem Kommunikationsendgerät vorgesehen sein kann.

Auch ein Einsatz des Verfahrens in Kraftfahrzeugen ist möglich, sofern als erforderliche Komponenten mindestens zwei Lautsprecher und ein Mikrophon, beispielsweise eine Freisprecheinrichtung, vorhanden sind.

Allgemein umfasst das Verfahren sämtliche akustische Anwendungen, bei denen mindestens zwei Lautsprecher und ein Mikrophon vorhanden sind, wobei hinsichtlich der Signalverarbeitung in vielen Fällen Ergänzungen der Hardware/Software vorzunehmen sein werden.

Das oben beschriebene Verfahren kann noch dadurch verbessert werden, dass parallel das im Stand der Technik bekannte "Head Tracking" mittels einer digitalen Kamera zur Nachverfolgung von Kopfbewegungen vorgenommen wird. Dabei werden die ausgewerteten Signale der Digitalkamera zur Anpassung sog. "auf den Kopf bezogene Übertragungsfunktionen" (Head Related Transfer Functions) an die Kopfstellung des Benutzers verwendet.

## Patentansprüche

1. Verfahren zum Bestimmen einer Position eines Benutzers eines akustischen Wiedergabegeräts, wie eines Kommunikationsendgerätes, das mit mindestens zwei Lautsprechern (1, 2) und einem Mikrophon (3) ausgestattet ist,
**dadurch gekennzeichnet, dass**
- von den mindestens zwei Lautsprechern (1, 2) aus ein geeignetes Anregungssignal ausgesendet wird, wenn der Benutzer sich in der Umgebung des akustischen Wiedergabegerätes befindet,
- eine Impulsantwort des Anregungssignals von dem Mikrophon erfasst wird und
- die Impulsantwort zur Bestimmung der Position des Benutzers ausgewertet wird.

2. Verfahren nach Anspruch 1,
**dadurch gekennzeichnet, dass**
außerdem als Referenz die Impulsantwort des Anregungssignals in Abwesenheit des Benutzers erfasst und ausgewertet wird.

3. Verfahren nach einem der Ansprüche 1 oder 2,
**dadurch gekennzeichnet,**
**dass** als Anregungssignal ein breitbandiges Signal eingesetzt wird.

4. Verfahren nach Anspruch 3,
**dadurch gekennzeichnet,**
**dass** als Anregungssignal ein Rauschsignal verwendet wird.

5. Verfahren nach Anspruch 4,
**dadurch gekennzeichnet,**
**dass** als Anregungssignal ein "Maximum Length Sequence"(s)-Signal eingesetzt wird.

6. Verfahren nach Anspruch 5,
**dadurch gekennzeichnet, dass**
die Impulsantwort des Anregungssignals durch Kreuzkorrelation des "Maximum Length Sequence(s)"-Signals mit einem Mikrophonsignal, das auf dem Anregungssignal beruht, gewonnen wird.

7. Verfahren nach einem der Ansprüche 1 bis 6,
**dadurch gekennzeichnet,**
**dass** das Anregungssignal so leise abgespielt wird, dass es unterhalb der mittleren menschlichen Hörschwelle nach DIN 1320 liegt.

8. Verfahren nach einem der Ansprüche 1 bis 6,
**dadurch gekennzeichnet,**
**dass** das Anregungssignal so leise abgespielt wird, dass es von einem über die Lautsprecher abgespielten Audiosignal verdeckt (DIN 1320) wird.

9. Verwendung des Verfahrens nach einem der Ansprüche 1 - 8, zur Steuerung eines transauralen akustischen Systems, das bei dem akustischen Wiedergabegerät verwirklicht ist.
